# EUROPÄISCHE PATENTSCHRIFT

(11) **EP 2 601 848 B1**
(45) Veröffentlichungstag und Bekanntmachung des Hinweises auf die Patenterteilung: **09.10.2019**
(21) Anmeldenummer: 12195740.1
(22) Anmeldetag: 05.12.2012
(51) Int. Cl.: A23L 2/52, A23L 2/02, A23L 2/56, A23D 7/005, A23L 2/58, A23D 7/01, A23L 2/68, A23L 29/10

(54) **Emulsion zur Verwendung in Lebensmitteln, insbesondere Getränke**
Emulsion for use in foodstuff, in particular beverages
Emulsion pour utilisation dans des denrées alimentaires, en particulier des boissons

(30) Priorität: 06.12.2011 DE 102011056111
(43) Veröffentlichungstag der Anmeldung: 12.06.2013
(73) Patentinhaber: Sensient Colors Europe GmbH, 21502 Geesthacht (DE)
(72) Erfinder: Klingenberg, Andreas, 21502 Geesthacht (DE)
(74) Vertreter: RGTH

(56) Entgegenhaltungen:
- EP-A1- 2 359 698
- EP-A2- 0 106 100
- WO-A1-2011/154407
- WO-A2-2011/029077
- JP-A- 63 291 979
- US-A1- 2009 018 186
- DATABASE WPI Week 201047 Thomson Scientific, London, GB; AN 2010-H54552 XP002695496, & JP 2010 142205 A (HASEGAWA CO LTD) 1. Juli 2010 (2010-07-01)
- DATABASE WPI Week 200433 Thomson Scientific, London, GB; AN 2004-351401 XP002695497, & JP 2004 091392 A (BIOMEDICS YG) 25. März 2004 (2004-03-25)

## Beschreibung

Die Erfindung betrifft eine Emulsion, ein Verfahren zu deren Herstellung, die Verwendung der Emulsion sowie ein Getränk, umfassend die Emulsion.

Eine Emulsion der eingangs genannten Art wird in dem europäischen Patent Nr. 1 972 206 B1 offenbart.

Diese vorbekannte Emulsion weist eine in einer wässerigen Phase dispergierte Öl-Phase auf, die aus einem fettlöslichen Farbstoff gebildet ist. Die Emulsion umfasst eine Emulgatorzusammensetzung zur Emulgierung eines fettlöslichen Carotinoid-Farbstoffes in einem Lebensmittel, die jeweils bezogen auf das Gewicht der Emulgatorzusammensetzung zwischen 45 und 55 Gew.-% zumindest eines Lecithins und zwischen 45 und 55 Gew.-% zumindest eines Saccharoseesters von Fettsäuren umfasst. Die Fettsäuren sind dabei aus der Gruppe ausgewählt, die Palmitinsäure, Stearinsäure, Ölsäure, Laurinsäure und Erucasäure umfasst. Das Lecithin ist aus der Gruppe ausgewählt, die aus Phosphatidylcholin, Phosphatidylethanolamin und Phosphatidylinosit besteht. Diese aus der EP 1 972 206 B1 bekannte Emulsion zeichnet sich insbesondere dadurch aus, dass diese eine höhere Transparenz und eine bessere Leuchtkraft als bekannte Emulsionen von Lebensmittelfarbstoffen aufweist.

Weiterhin offenbart die EP 2 359 698 A1 Zusammensetzungen, umfassend ein oberflächenaktives System, das Saponine aufweist sowie Lecithin. Die Zusammensetzungen umfassen (i) eine wässerige Phase, die Wasser aufweist, ein, zwei oder mehr Colösungsmittel, ausgewählt aus der Gruppe, bestehend aus Propylenglykol, Ethanol, Triacetin und Glycerol und gegebenenfalls ein, zwei oder mehr Zucker, bevorzugt ausgewählt aus der Gruppe, bestehend aus Saccharose, Fructose und Glucose; (ii) ein oberflächenaktives System, umfassend ein Saponin oder eine Mischung von zwei, drei oder mehr Saponinen und Lecithin und (iii) eine Öl-Phase, umfassend oder bestehend aus ein, zwei, drei oder mehr Substanzen, ausgewählt aus der Gruppe, bestehend aus Aromen, Vitaminen, farbgebenden Lebensmitteln und mehrfach ungesättigten Fettsäuren, mit der Maßgabe, dass kein Polyglycerolfettsäureester enthalten ist.

Die Wahl eines Emulgators hängt von den Eigenschaften der zu lösenden Komponente, den Eigenschaften des Emulgators und den Rahmenbedingungen ab, bei denen das Lebensmittel vorliegt. Bei der Verwendung von fettlöslichen Lebensmittelfarben zur Färbung von Fruchtsäften ist beispielsweise zu beachten, dass Fruchtsäuren eine Zerstörung des Emulgators bewirken können. Aus diesem Grunde ist die Verwendung von säurestabilen Emulgatoren wünschenswert.

Neueste Untersuchungen zeigen jedoch, dass der in der EP 1 972 206 B1 verwendete Zuckerester in sehr sauren Getränken, beispielsweise unter pH 3,5 nur eine begrenzte Stabilität aufweist. Zudem hat sich gezeigt, dass die Verwendung des Zuckeresters nicht vollständig zu der gewünschten, annähernd transparenten und stabilen Farbgebung führt.

Die JP 2006-249037 A beschreibt eine Zusammensetzung, die Ethanol, zerkleinerte Propolis, Saponine, Lecithin, Polyglycerinester von Speisefettsäuren und Puderzucker umfasst. Hierdurch soll eine Zusammensetzung in Pulverform zur Verfügung gestellt werden, die in Getränken eingesetzt werden kann und in im Wasser gelösten Zustand eine gute Transparenz aufweisen soll.

Die JP 63291979 A beschreibt eine Emulsion, enthaltend Tocopherol, eine Säure-Komponente, ein Monoglycerid einer organischen Säure, eine gummiartige Verbindung und ein Saponin, in spezifischen Verhältnissen mit ausgezeichneter Stabilität auch im sauren Bereich über längere Zeit.

Die US 2009/018186 A1 bezieht sich auf ein Getränkeprodukt, umfassend mindestens eine Getränkegrundlage und mindestens eine mehrfach ungesättigte Fettsäure-Emulsion, wobei die Emulsion umfasst: eine kontinuierliche flüssige Phase, einen Emulgator und eine diskontinuierliche flüssige Phase, umfassend eine Mischung, die eine mehrfach ungesättigte Fettsäurequelle und ein Dispergiermittel aufweist, wobei die mehrfach ungesättigte Fettsäurequelle mindestens eine mehrfach ungesättigte Fettsäure aufweist, wobei das Gewichtsverhältnis der Fettsäurequelle zum Dispergiermittel in der Mischung im Bereich von etwa 9:1 bis etwa 1:10 liegt.

Weiterhin offenbart die JP 2010142205 A eine emulgierte Zusammensetzung vom Öl/Wasser-Typ, die umfasst: (A) ein fettlösliches Material, (B) Quillaja Saponine, (C) einen Polyoxyethylensorbitanfettsäureester und (D) ein oder mehrere Verbindungen, ausgewählt aus Wasser, einwertigem Alkohol und mehrwertigem Alkohol.

Des weiteren offenbart die JP 2004091392 A eine Zusammensetzung, die eine in Wasser schwerlösliche Komponente enthält, umfassend 1 bis 50 Gew.-% der schwer wasserlöslichen Komponente, 1 bis 99 Gew.-% von Polyglycerolfettsäureestern mit 8 bis 22 Kohlenstoffatome enthaltende Fettsäuren als aufbauende Fettsäuren, 0 bis 20 Gew.-% eines Saponins und 0 bis 20 Gew.% Lecithin, wobei die Polyglycerolfettsäureester einen gesättigten Polyglycerolfettsäureester und einen ungesättigten Polyglycerolfettsäureester mit 3 bis 25 % mittlerer Veresterung aufweisen.

Die EP 0106100 A2 beschreibt wässerige Zubereitungen, enthaltend Vitamin E, hergestellt durch Emulgieren oder Solubilisieren von Vitamin E in einer wässerigen Phase in Gegenwart eines Saponins.

Schließlich bezieht sich die WO 2011/029077 A2 auf ein Aromasystem, umfassend mindestens eine Emulsion, Mikroemulsion oder Nanoemulsion, und weist einen Kräuterextrakt auf, wobei der Kräuterextrakt mindestens umfasst: Thymol, Zimtsäurealdehyd, Eugenol, Carvacrol, Eukalyptol oder eine Kombination hiervon. Der Emulgator wird beispielsweise ausgewählt aus Lecithin, Polysorbat, Quillaja Saponin und Lauroylarginatderivaten.

Aufgabe der Erfindung ist es daher, diese Nachteile des Standes der Technik zu vermeiden. Es soll insbesondere eine Emulsion vorgeschlagen werden, die über eine geeignete Stabilität, insbesondere auch eine große Lichtstabilität verfügt. Weiterhin soll die Emulsion eine hohe Transparenz bereitstellen. Zudem soll eine Emulsion bereitgestellt werden, die eine hohe Säurestabilität in sehr sauren Getränken, beispielsweise unter pH 3,5 aufweist.

Diese Aufgabe wird mit den Merkmalen des Anspruchs 1 gelöst. Somit wird eine Emulsion zur Verwendung im Lebensmittelbereich, insbesondere in einem Lebensmittel, bereitgestellt, umfassend eine wässerige und eine Öl-Phase, die aufweisen
- eine oder mehrere zu emulgierende fettlösliche Komponenten;
- einen oder mehrere Emulgatoren in der wässerigen Phase, ausgewählt aus der Gruppe der Saponine; und
- einen oder mehrere Ester von einem pflanzlichen Lipid mit einer Genusssäure in der Öl-Phase,
wobei die zu emulgierende fettlösliche Komponente ein Carotinoid ist,
das pflanzliche Lipid eine gesättigte Speisefettsäure ist, die die nachfolgende allgemeine Formel erfüllt: CH₃-(CH₂)ₓCOOH mit x = 8 bis 25,
- und die Genusssäure Ascorbinsäure ist.

Vorteilhafte Ausgestaltungen der Erfindungen manifestieren sich in den Unteransprüchen.

Die Erfindung sieht daher vor, dass zumindest ein Emulgator in der wässerigen Phase ein Saponin darstellt, das in Kombination mit einem oder mehreren Estern, hergestellt aus einem pflanzlichen Lipid, das eine gesättigte Speisefettsäure ist, die die nachfolgende allgemeine Formel erfüllt: CH₃-(CH₂)ₓCOOH mit x = 8 bis 25, und Ascorbinsäure, zum Emulgieren von Carotinoiden eingesetzt wird und zu besonders vorteilhaften Eigenschaften der gebildeten Emulsion beiträgt.

Die zu emulgierende Komponente ist ein fettlöslicher Farbstoff sowie Mischungen dieser.

Der Begriff "Farbstoff" umfasst einen Farbstoff, der in einem Lebensmittel eingesetzt werden kann und darf. Der fettlösliche Farbstoff ist daher ein Lebensmittelfarbstoff. Es handelt sich um Carotinoide, beispielsweise ausgewählt aus alpha- oder beta-Carotin, Bixin, Capsanthin, Capsorubin, Lutein, Rhodoxanthin, Lycopin oder Apocarotinal oder Mischungen dieser.

Der Lebensmittelfarbstoff ist ein Carotinoid. Ein besonders bevorzugter Lebensmittelfarbstoff ist *β*-Carotin. Die Farbstoffe sind jedoch erfindungsgemäß nicht auf Lebensmittelfarbstoffe beschränkt, sondern es können auch fettlösliche Farbstoffe, die keine Lebensmittelfarbstoffe sind, in der Öl-Phase vorliegen.

Zur Emulgierung der fettlöslichen Komponente wird erfindungsgemäß in der wässerigen Phase zumindest ein Emulgator, ausgewählt aus der Gruppe der Saponine, vorgesehen. Es kommen solche Saponine in Frage, die entweder selbst in Lebensmitteln als Inhaltsstoffe enthalten sind und hieraus gewonnen werden können oder Saponine, die bereits als Lebensmittelzusatzstoff zugelassen sind. Saponine sind in Pflanzen vorkommende Glykoside, die wegen ihrer physikalisch-chemischen sowie physiologischen Eigenschaften von Interesse sind. Saponine sind meist bitter schmeckende, oberflächenaktive Verbindungen, die aufgrund ihrer Bedeutung für die Seifenherstellung (lat. sapo = Seife) bekannt wurden. Das Aglykon der Saponine besteht aus einem Steroid- oder Triterpenteil, an das verschiedene Zuckermoleküle gebunden sind. Man unterscheidet daher zwischen Steroid- und Triterpensaponinen. Beispielsweise enthalten Hülsenfrüchte, Spinat, Spargel und Hafer Saponine. Saponine werden z. B. in Lakritze in größeren Mengen verwendet.

Innerhalb der Europäischen Gemeinschaft sind saponinreiche Extrakte aus der Rinde des Panama- oder Seifenrindenbaumes (Quillaja saponaria, sog. Quillaja-Baum) als Lebensmittelzusatzstoffe (E 999) zugelassen und werden u. a. als Schaumbildner eingesetzt. Die Rinde dieses Baumes enthält bis zu 5% Saponine. In Deutschland sind Quillaja-Extrakte als Zusatzstoff für alkoholfreie, aromatisierte Erfrischungsgetränke auf Wasserbasis zugelassen (200 mg/L wasserfreier Extrakt).

Die wirksamen oberflächenaktiven Komponenten in Quillaja-Extrakten sind Triterpen-Saponine, welche mittels wässeriger Auszugsverfahren aus dem Quillaja-Baum gewonnen werden. Man unterscheidet hierbei zwischen Quillaja-Extrakten vom Typ 1 und vom Typ 2. Ein Quillaja-Extrakt vom Typ 1 wird durch wässerige Extraktion aus der zerkleinerten Rinde oder aus dem Holz des Quillaja-Baums und anschließende Reinigung erhalten. Der Saponin-Gesamtgehalt im Extrakt vom Typ 1 beträgt etwa 20 bis 25%. Ein Quillaja-Extrakt vom Typ 2 wird zusätzlichen Aufreinigungsschritten unterzogen, wie beispielsweise einer Ultrafiltration, Membranfiltration oder einer Affinitätschromatographie. Der Saponingehalt im Extrakt vom Typ 2 ist höher als bei Typ 1, da Typ 1 weniger aufgereinigt ist als Typ 2.

In der vorliegenden Erfindung wird bevorzugt ein Quillaja-Extrakt vom Typ 2 verwendet. Der Saponin-Gesamtgehalt des verwendeten Quillaja-Extrakts, bezogen auf die Trockensubstanz, liegt dabei bevorzugt im Bereich von 65 bis 90%.

Im Rahmen der vorliegenden Erfindung wird als Emulgator bevorzugt der "Quillaja-Extrakt E 999" in einer 20% verdünnten wässerigen Lösung eingesetzt.

Neben den ein oder mehreren Emulgatoren in der wässerigen Phase werden zum Emulgieren der ein oder mehreren fettlöslichen Komponenten in der Öl-Phase ein oder mehrere Ester von einem pflanzlichen Lipid mit einer Genusssäure eingesetzt.

Unter "pflanzlichem Lipid" handelt es sich um Speisefettsäuren (nachfolgend als "Fettsäuren" bezeichnet), von denen ausgegangen werden kann, mit Ascorbinsäure hieraus einen Ester zu erzeugen. Dem Fachmann ist die Herstellung eines Esters bekannt, so dass er ohne weiteres ausgehend von zwei Verbindungen diese entweder direkt miteinander umsetzt oder gegebenenfalls nach entsprechender Derivatisierung hieraus einen Ester in geeigneter Weise herstellen kann.

Die pflanzlichen Lipide, die erfindungsgemäß bevorzugt zum Einsatz kommen, sind gesättigte höherkettige Fettsäuren. Unter "höherkettig" wird erfindungsgemäß eine Fettsäure verstanden, die die nachfolgende allgemeine Formel erfüllt: CH₃-(CH₂)ₓCOOH mit x = 8 bis 25, bevorzugt 8 bis 20, ganz besonders bevorzugt 10 bis 16. Insbesondere bevorzugt sind Laurinsäure (x = 10), Palmitinsäure (x = 14) oder Stearinsäure (x = 16), ganz besonders bevorzugt sind Palmitin- und Stearinsäure.

Zur Erzeugung eines Esters wird beispielsweise die OH-Gruppe der Ascorbinsäure, mit der COOH-Gruppe einer gesättigten Fettsäure, zum Ester umgesetzt. Die Esterbildung an sich ist dem Fachmann bekannt und wird hier nicht im Einzelnen erläutert.

Ganz besonders bevorzugte Ester von pflanzlichen Lipiden mit Genusssäuren, die erfindungsgemäß verwendet werden, sind Ascorbylpalmitat, Ascorbylstearat sowie Mischungen dieser. Insbesondere bevorzugt ist Ascorbylpalmitat. Diese können Öl-in-Wasser-Emulsionen ausbilden, sind dafür bekannt, den Zusammenhalt der Zutaten in der Wurstherstellung zu verbessern und unterstützen durch ihre komplexbildenden Eigenschaften die Wirkung von Antioxidantien.

Erfindungsgemäß wurde nun festgestellt, dass derartige Ester aus pflanzlichem Lipid und Genusssäure (nachfolgend als "Ester" bezeichnet) in überraschender Weise dazu in der Lage sind, Emulsionen zu stabilisieren, insbesondere auch die sehr stark gekrümmte Grenzfläche von Öl-in-Wasser-Mikroemulsionen, wenn als zusätzlicher Emulgator zumindest ein Saponin in der Wasserphase vorhanden ist. Die Kombination aus Ester und Saponin(en) hat daher eine besonders vorteilhafte und unerwartete Wirkung für Emulsionen.

Die Verwendung der erfindungsgemäßen Kombination Saponin(e)/Ester, bevorzugt Quillaja-Extrakt/Ester, führt daher zur Erzeugung einer stabilen Emulsion, bevorzugt Mikroemulsion. Es wird eine stabile Grenzfläche auch in einer ÖI-in-Wasser-Mikroemulsion gebildet. Neben der Emulsionsstabilisierung wird die oxidative Stabilität der Emulsion verbessert. Wird die Emulsion in einem Getränk eingesetzt, so bewirkt die erfindungsgemäße Kombination Saponin(e)/Ester im Falle eines Farbstoffs oder einer Farbstoffzubereitung als zu emulgierender Komponente, dass eine vorzeitige Farbverblassung im Getränk unterbunden wird.

Die erfindungsgemäße Kombination Saponin(e)/Ester zeichnet sich insbesondere durch eine hohe Säurestabilität in sehr sauren Getränken mit einem pH-Wert im Bereich von ≤ 3,5, insbesondere im pH-Bereich von 2,5 bis 3,5, aus.

Weiterhin stellt die erfindungsgemäße Kombination Saponin(e)/Ester insofern ein effizientes System zur Emulgierung von fettlöslichen Komponenten, wie Lebensmittelfarbstoffen, dar, als insbesondere in Getränken, vorzugsweise in Softdrinks, eine leuchtend gelbe, annähernd transparente und stabile Farbgebung erreicht wird.

Die erfindungsgemäße Kombination Saponin(e)/Ester ist insofern vorteilhaft, da Lecithin, sofern es als Coemulgator in der Emulsion enthalten ist, hinsichtlich der Einsatzmenge deutlich herabgesetzt, in Einzelfällen sogar völlig weggelassen werden kann.

Unter dem Begriff "Lecithin" wird hier eine Substanz gemäß EG-Nummer E 322 (siehe Amt für amtliche Veröffentlichungen der Europäischen Gemeinschaft, CONSLEG: 1996L0077 - 20/11/2003) verstanden. Danach ist Lecithin als Mischung oder Fraktion aus Phosphatiden, die mittels physikalischer Verfahren aus tierischen oder pflanzlichen Nahrungsmitteln gewonnen werden, definiert. Lecithine umfassen auch die hydrolysierten Stoffe, die mit ungefährlichen und geeigneten Enzymen gewonnen werden. Das Enderzeugnis darf keinerlei enzymatische Restaktivität aufweisen. Als Synonyme für Lecithine werden die Begriffe "Phosphatide" und "Phospholipide" verwendet. Vorzugsweise ist das Lecithin aus der Gruppe ausgewählt, die Phosphatidylcholin, Phosphatidylethanolamin und Phosphatidylinosit umfasst. Bevorzugter ist das Lecithin Phosphatidylcholin. Nach einer weiteren Ausführungsform umfasst die Emulgatorzusammensetzung Lecithine gemäß E 473.

Erfindungsgemäß kann Lecithin in der Emulsion komplett ersetzt werden. Es kann jedoch Fälle geben, in denen sich der oder die Ester der pflanzlichen Lipide mit Genusssäuren schlechter lösen als Lecithin, so dass die Grenzflächen stabiler sind, wenn noch ein Rest Lecithin vorhanden ist. Somit ist die vollständige Substitution von Lecithin zwar möglich, aber nicht in jedem Fall vorteilhaft. Dies kann in jedem Einzelfall ohne weiteres vom Fachmann festgestellt werden. Besonders bevorzugt ersetzt die Menge an zugesetztem(n) Ester(n) etwa eine gleiche Menge an Lecithin.

Neben einer besonders guten Stabilität der Emulsion, insbesondere auch in sehr sauren Getränken, konnte eine erhöhte Lichtstabilität festgestellt werden. Diese vorteilhafte Wirkung wird auf die antioxidative Schutzwirkung des/der Ester/s auf die zu emulgierende Komponente zurückgeführt. Dies stellt einen entscheidenden Vorteil in dem Falle dar, dass die zu emulgierende Komponente ein Farbstoff oder eine Farbstoffzubereitung, wie Carotinoid, darstellen, da diese in Getränken bis zu 12 Monate in transparenten Flaschen dem Licht ausgesetzt sind. Es ist zwar bekannt die wasserlösliche Ascorbinsäure den Getränken zuzusetzen, um beispielsweise Carotinoide vor Verblassung zu schützen; dies ist jedoch nur bis zu einem gewissen Grad möglich, da bei hohen Dosierungen die geschmacklichen Eigenschaften der Ascorbinsäure deren Einsatz begrenzen. Erfindungsgemäß ist der Zusatz von Estern aus pflanzlichen Lipiden mit Genusssäuren der Zugabe von Ascorbinsäure überlegen, da die geschilderten Beschränkungen hinsichtlich der Zugabemenge und Nachteile durch eine geschmackliche Veränderung nicht auftreten.

Besonders vorteilhaft ist die Kombination von Quillaja-Extrakt mit dem/den Ester/n in Form des Antioxidans und Coemulgators Ascorbylpalmitat. Ascorbylpalmitat, insbesondere 6-Palmitoyl-L-ascorbinsäure (E-304), stellt ein bekanntes Antioxidationsmittel und einen Emulgator dar und wird üblicherweise zur Fettstabilisierung in Lebensmitteln eingesetzt. Bekanntermaßen findet Ascorbylpalmitat hauptsächlich in Wurstwaren, Mayonnaise und Hühnerbrühe Verwendung.

Ascorbylpalmitat ist ein Fettsäureester der Ascorbinsäure, wird durch Veresterung von Ascorbinsäure mit Palmitinsäure gewonnen und auch als Palmitinsäureascorbylester bezeichnet.

Diese Ausführungsformen sind erfindungsgemäß besonders vorteilhaft bedingt durch die Duo-Funktionalität der verwendeten Ester, wie Ascorbylpalmitat, die sowohl als Coemulgator wie auch als antioxidativer Schutzstoff wirksam sind. Ascorbylpalmitat zeigt eine antioxidative Wirkung und verbessert die Lichtstabilität. Die erfindungsgemäßen Emulsionen, bevorzugt Mikroemulsionen, sind daher besonders gut für die Anwendung in sauren Getränken geeignet, und zeichnen sich zusätzlich durch gute Oxidationsstabilität aus.

Die antioxidative Schutzwirkung kann erfindungsgemäß durch weitere Zusätze, wie Ascorbinsäure oder verkapselnde Hydrokolloide, wie z. B. Gummi arabicum, modifizierte Stärke, verbessert werden.

Die wässerige Phase kann neben den ein oder mehreren Emulgatoren in Form von ein oder mehreren Saponinen, bevorzugt Quillaja-Extrakt, weitere Bestandteile enthalten. Diese sind bevorzugt ausgewählt aus ein oder mehreren Polyolen, ein oder mehreren Zuckeralkoholen und ein oder mehreren Zuckersirupen. Bevorzugte Polyole sind beispielsweise Propylengycol und/oder Glycerol. Bevorzugte Zuckeralkohole sind beispielsweise Glycerol und/oder Sorbitol. Bevorzugte Zuckersirupe sind beispielsweise Fructose, Glucose und/oder Invertzucker. Selbstverständlich können auch Mischungen dieser Bestandteile miteinander in der wässerigen Phase der Emulsion vorliegen.

Besonders bevorzugt enthält die wässerige Phase mindestens ein Polyol und/oder mindestens einen Zuckeralkohol. Besonders bevorzugt enthält die wässerige Phase Glycerol und/oder Sorbitol und/oder Fructose und/oder Glucose, ganz besonders bevorzugt besteht die wässerige Phase neben Saponin(en) aus Glycerol und Sorbitol und Fructose.

Vorteilhafterweise umfasst die wässerige Phase auch sog. Hydrokolloide. Bei Hydrokolloiden handelt es sich um eine große Gruppe an Verbindungen, die Polysaccharide oder Proteine darstellen, die als Kolloide in Wasser in Lösung gehen und dort zur Gelbildung neigen. Bevorzugt eingesetzte Hydrokolloide sind Gummi arabicum, Pektin oder modifizierte Stärke. Hydrokolloide werden zur Stabilisierung der zu emulgierenden wertgebenden Inhaltsstoffe, d.h. der zu emulgierenden Komponente(n), gegen deren Oxidation eingesetzt. Insbesondere bei Verwendung in Getränken haben Hydrokolloide Vorteile, da diese nicht nur eine Trübung ins Getränk einbringen, sondern gleichzeitig den Lichtschutz verbessern.

In der wässerigen Phase können weitere Zusätze enthalten sein, welche der Emulsion vorteilhafte Eigenschaften verleihen. Beispielsweise kann Ascorbinsäure, die wasserlöslich ist, als Antioxidans der wässerigen Phase der Emulsion zugesetzt werden. Hierdurch werden die Licht- und Oxidationsstabilität sowie die mikrobiologische Sicherheit der Emulsion verbessert.

In der Öl-Phase sind in der Regel pflanzliche Öle enthalten. Es können weitere Zusätze enthalten sein, welche der Emulsion vorteilhafte Eigenschaften verleihen. Dies sind, beispielsweise Antioxidantien, wie Tocopherol.

Bevorzugt weist die erfindungsgemäße Emulsion die wässerige Phase dispergiert in der Öl-Phase auf, wobei eine besonders feine Tröpfchengröße in der Öl-Phase mit gelösten Inhaltsstoffen vorliegt, die vorzugsweise eine Tröpfchengröße von 50 bis 600 nm, noch bevorzugter < 200 nm, umfasst.

Die erfindungsgemäße Emulsion besitzt aufgrund der geringen Teilchengröße eine hohe Transparenz. In einer bevorzugten Ausführungsform ist die Emulsion transparent. Ferner kann vorgesehen sein, dass die Emulsion bei Einsatz z. B. in Getränken einen Trübungskoeffizienten (FNU-Wert) von unter 40 erreicht und in der spektralphotometrischen Analyse bei 700 nm ein Absorptionskoeffizient von unter 0,1 erzielt wird. Der FNU-Wert ("Formazine Nephelometric Unit") ist ein Parameter für die Trübungsmessung.

Gegenstand der Erfindung ist auch die Verwendung der erfindungsgemäßen Emulsion im Nahrungsmittelbereich, insbesondere in einem Nahrungsmittel.

Die erfindungsgemäße Emulsion wird vorzugsweise einem Getränk in einer Dosierung von 0,05 bis 2 g/kg Getränk zugesetzt. Dabei wird vorzugsweise ein transparentes Erscheinungsbild erzielt.

Es hat sich erfindungsgemäß als besonders vorteilhaft herausgestellt, wenn das Endprodukt, insbesondere ein Getränk, soviel Saponin(e), bevorzugt Quillaja-Extrakt vom Typ 2, zugesetzt wird, dass ein Gesamtgehalt an Saponinen im Bereich von 5 ppm bis 15 ppm vorliegt. Bereits eine derart geringe Menge an Saponinen führt dazu, dass eine stabile Emulsion erhalten wird, d.h. der resultierenden Emulsion wird eine überraschend hohe Säurestabilität verliehen. Dies ist für den Fachmann völlig unerwartet, da beispielsweise Quillaja-Extrakte vom Typ 1 üblicherweise als Schaumbildner mit Konzentrationen von 100 ppm bis 250 ppm in Softdrinks zum Einsatz kommen. Erfindungsgemäß sind demgegenüber deutlich geringere Konzentrationen in einem Getränk bereits ausreichend, um eine stabile Emulsion zu erhalten.

Erfindungsgemäß bevorzugt ist der Quillaja-Extrakt vom Typ 2 in einer Konzentration von 5 ppm bis 50 ppm, bevorzugter 7,5 ppm bis 30 ppm, ganz besonders bevorzugt > 10 ppm bis 25 ppm in einem Nahrungsmittel, bevorzugt einem Getränk, ganz besonders bevorzugt einem sauren Getränk, vorhanden.

Der oder die Ester liegen erfindungsgemäß bevorzugt in einer Menge von 0,5 bis 5% vor. Besonders bevorzugt beträgt die Menge an Ester(n) + Lecithin 0,5 bis 5%. Eine gegenseitige Austauschbarkeit ist gegeben. Bevorzugt beträgt die Menge an Lecithin aber deutlich weniger im Vergleich zum Ester und liegt vorzugsweise im Bereich von 0 bis 2%, noch bevorzugter 0 bis 1,5%, besonders bevorzugt 0,1 bis 1%, insbesondere bevorzugt 0,1 bis 0,5%.

Ein weiterer Vorteil der Emulsion gemäß der vorliegenden Erfindung ist, dass keine "Ringbildung" bei Lagerung der mit der Emulsion erzeugten gefärbten Getränke in PET-Kunststofflaschen auftritt. Man bezeichnet dieses Verhalten auch als "bottle staining" und "neck ringing effect". Im Gegensatz zur erfindungsgemäß bereitgestellten Emulsion treten diese nachteiligen Effekte bei bekannten Emulsionen sehr häufig auf, so dass diese Produkte vom Verbraucher dann abgelehnt werden. Auch eine Emulgator-Kombination aus Zuckerestern und Lecithin, entsprechend der eingangs erläuterten EP 1 972 206 B1, weist diesen Nachteil der "Ringbildung" auf.

Die Emulsion umfasst vorzugsweise (a) von 0,5 bis 5%, bevorzugt von 0,5 bis 3% Ester, (b) Lecithin von 0 bis 2% und (c) von 15 bis 30% Saponin(e), bevorzugt Quillaja-Extrakt, wobei sich die prozentualen Angaben auf die Gesamtrezeptur der Zubereitung beziehen. Besonders bevorzugt beträgt die Summe aus Ester(n) + Lecithin 0,5 bis 5%.

Wenn Quillaja-Extrakt eingesetzt wird, ist es ein 20%iger in Wasser gelöster Extrakt.

Die Emulsion weist besonders bevorzugt die folgende Gesamtrezeptur auf:
a) Öl-Phase:

| | |
|---|---|
| - Ascorbylpalmitat | 0,5% bis 5% |
| - Lecithin | 0% bis 2% |
| - Carotinoid | 1,0% bis 10% |
| - pflanzliches Öl | 2,0% bis 20% |
| - Tocopherol | 1,0% bis 3%, |

wobei die Summe aus Ascorbylpalmitat + Lecithin bevorzugt im Bereich von 0,5 bis 5% liegt;
b) Wasserphase:

| | |
|---|---|
| - höherer Alkohol wie Glycerol | |
| und/oder Zuckeralkohol wie Sorbitol | |
| und/oder Zuckersirup wie Fructose | 40% bis 80% |
| - Saponin(e), bevorzugt Quillaja-Extrakt | 15% bis 30% |

wobei der Quillaja-Extrakt, insbesondere 20%ig, in Wasser gelöst ist.

Eine besonders bevorzugte Verwendung der Emulsion gemäß der vorliegenden Erfindung ist zur Emulgierung eines Carotinoids in einem Fruchtgetränk oder einer Fruchtzusammensetzung.

Emulsionen mit einer dispergierten Öl-Phase, deren durchschnittliche Öltröpfchengröße kleiner oder gleich 200 nm ist, können mittels an sich bekannter Hochdruck-Homogenisatoren hergestellt werden. Dabei wird eine Rohemulsion oder -suspension beispielsweise mittels einer Drei-Kolben-Pumpe bei einem Druck von bis zu 900 bar durch ein Düsensystem gefördert. Extreme Scher- und Dehnungskräfte sorgen für eine effiziente Zerkleinerung und eine enge Tröpfchengrößenverteilung. Eine hochturbulente Mischkammer sorgt für eine Stabilisierung der Tropfen und minimiert störende Koaleszenzeffekte. Die erfindungsgemäße Emulsion wird vorzugsweise bei einem Druck von 200 bis 900 bar hergestellt.

Die Erfindung wird nachfolgend anhand von Beispielen näher erläutert:

### Herstellung der erfindungsgemäßen Emulsion

Zur Herstellung der erfindungsgemäßen Emulsion wird folgende Rezeptur bereitgestellt und wie im Folgenden beschrieben verarbeitet. Die prozentualen Angaben beziehen sich auf die Gesamtrezeptur.

| | | **Bezeichnung** | **Gehalt** |
|---|---|---|---|
| **Wasser-Phase** | | Glycerol | 40,00 - 80,00% |
| | | (höherer Alkohol) | |
| | | Sorbitol (Zuckeralkohol) Fructose (Zuckersirup) | |
| | | Quillaja-Extrakt 20% in Wasser gelöst | 15,00 - 30,00% |
| | | | |
| **Öl-Phase** | | Pflanzliches Öl | 2,00 - 20,00% |
| | | Tocopherol (Antioxidanz) | 1 - 3% |
| | | Ascorbylpalmitat Lecithin (Co-Emulgator, Antioxidanz) | 0,5 - 5% |
| | | Carotin 30%ig (Farbstoff, fettlösliche Komponente) und/oder Konzentrat von Gemüse wie Karotte (lipophile färbende Lebensmittel) | 1 - 10% |

Vorzugsweise ist der Quillaja-Extrakt ein 20%iger in Wasser gelöster Extrakt.

### 1. Herstellung Wasserphase

Glycerol, Sorbitol und Quillaja-Extrakt werden vermischt und unter ständigem Rühren mittels Labor-Propellerrührer bei ca. 350 U/min auf 40°C erwärmt.

### 2. Herstellung Öl-Phase

Tocopherol, pflanzliches Öl, Ascorbylpalmitat, ggf. Lecithin und Carotin werden vermischt und unter ständigem Rühren auf 140°C erhitzt und für 5 min gehalten. Durch Kontrolle des Mikrobildes (1000x) ist abzusichern, dass sämtliche *β-*Carotin-Kristalle gelöst sind.

### 3. Herstellung der Emulsion durch Zugabe von Öl in Wasser

Der Wasserphase wird im Rahmen eines Vermischungsschrittes unter Dispergieren mittels Ultra-Turrax bei 500 U/min die Öl-Phase langsam aber stetig zugeführt. Anschließend erfolgt eine Voremulgierung bei 10.000 U/min für 5 min. Die Partikelgrößenverteilung und das Mikrobild der Voremulsion werden kontrolliert. Hier sollen 90% der Partikel eine Größe von < 1,5 µm aufweisen (Zielvorgabe: 90.00% < 1,5µm).

Direkt im Anschluss erfolgt eine Behandlung mit dem HochdruckHomogenisator bei 450/50 bar in mehreren Durchgängen (2-4) . Danach werden erneut die Partikelgrößenverteilung (Zielvorgabe: 90.00% < 1,0µm) und das Mikrobild (blank) sowie der Trübungswert (c=0,02% → < 40 FNU) der Emulsion kontrolliert. Unter dem Begriff "Mikrobild" ist im vorliegenden Zusammenhang das Bild in der Mikroskop-Vergrößerung, d. h. beim Blick auf den Mikroskopobjektträger, auf den die (Vor-)Emulsion aufgetragen wurde, beispielsweise in 100facher und/oder 1000facher Vergrößerung, zu verstehen.

### 4. Bewertung der Stabilität

Es hat sich gezeigt, dass die erfindungsgemäße Emulsion im Lagertest bei 5°C und 40°C 9 Monate bzw. 5 Wochen stabil war. Zudem belegen die Partikelgrössenmessungen und die spektralphotometrischen Analysen, dass die erfindungsgemäße Emulsion keine Phasentrennung zeigt und ohne Hinweis auf einen Farbabbau stabil bleibt.

## Patentansprüche

1. Emulsion zur Verwendung in einem Lebensmittel, umfassend eine wässerige und eine Öl-Phase, die aufweisen
- eine oder mehrere zu emulgierende fettlösliche Komponenten;
- einen oder mehrere Emulgatoren in der wässerigen Phase, ausgewählt aus der Gruppe der Saponine; und
- einen oder mehrere Ester von einem pflanzlichen Lipid mit einer Genusssäure in der Öl-Phase,
wobei die zu emulgierende fettlösliche Komponente ein Carotinoid ist,
das pflanzliche Lipid eine gesättigte Speisefettsäure ist, die die nachfolgende allgemeine Formel erfüllt: CH₃-(CH₂)ₓCOOH mit x = 8 bis 25,
und die Genusssäure Ascorbinsäure ist.

2. Emulsion nach Anspruch 1,
**dadurch gekennzeichnet,**
**dass** die pflanzlichen Lipide ausgewählt sind aus Laurinsäure, Palmitinsäure oder Stearinsäure.

3. Emulsion nach Anspruch 1 oder 2,
**dadurch gekennzeichnet,**
**dass** der oder die Ester von pflanzlichen Lipiden mit Genusssäuren ausgewählt sind aus der Gruppe, bestehend aus Ascorbylpalmitat, Ascorbylstearat, bevorzugt ist Ascorbylpalmitat.

4. Emulsion nach einem der vorhergehenden Ansprüche,
**dadurch gekennzeichnet,**
**dass** die Saponine Quillaja-Extrakt darstellen, wobei bevorzugt der Quillaja-Extrakt ein 20%iger in Wasser gelöster Extrakt ist.

5. Emulsion nach einem der Ansprüche 2 bis 4,
**dadurch gekennzeichnet,**
**dass** das Carotinoid, ausgewählt aus alpha- oder beta-Carotin, Bixin, Capsanthin, Capsorubin, Lutein, Rhodoxanthin, Lycopin oder Apocarotinal.

6. Emulsion nach einem der vorhergehenden Ansprüche,
**dadurch gekennzeichnet,**
**dass** in der Öl-Phase als Emulgator Lecithin vorhanden ist, bevorzugt in Form von Phosphatidylcholin.

7. Emulsion nach einem der vorhergehenden Ansprüche,
**dadurch gekennzeichnet,**
**dass** die wässerige Phase einen oder mehrere Bestandteile enthält, die ausgewählt sind aus ein oder mehreren Polyolen, ein oder mehreren Zuckeralkoholen, ein oder mehreren Zuckersirupen, ein oder mehreren Hydrokolloiden oder Mischungen dieser, wobei bevorzugte Polyole Propylenglycol und Glycerol darstellen, bevorzugte Zuckeralkohole Glycerol und Sorbitol darstellen, bevorzugte Zuckersirupe Fructose, Glucose und Invertzucker darstellen und bevorzugte Hydrokolloide Gummi arabicum, Pektin und modifizierte Stärke darstellen.

8. Emulsion nach einem der vorhergehenden Ansprüche,
**dadurch gekennzeichnet,**
**dass** die Emulsion bei Licht einer Wellenlänge, die im für das menschliche Auge sichtbaren Bereich liegt, transparent ist, und/oder dass die Emulsion bei 700 nm einen Absorptionskoeffizienten kleiner 0,1 aufweist, und/oder dass die durchschnittliche Größe der Öltröpfchen in der Emulsion 50 nm bis 600 nm, bevorzugt < 200 nm, noch bevorzugter < 100 nm beträgt, und/oder dass die Emulsion einen Trübungskoeffizienten (FNU-Wert) von 40 oder weniger aufweist.

9. Emulsion nach einem der vorangehenden Ansprüche,
**dadurch gekennzeichnet,**
**dass** die wässerige Phase neben in Wasser gelöstem Quillaja-Extrakt zusätzlich einen höheren Alkohol, wie Glycerol, und/oder einen Zuckeralkohol, wie Sorbitol, und/oder Zuckersirupe, wie Fructose, enthält, und/oder dass die Emulsion zwischen 40 und 80% Zuckeralkohol, wie Glycerol oder Sorbitol, und/oder Zuckersirup, wie Fructose, und/oder Glucose, umfasst.

10. Emulsion nach einem der vorangehenden Ansprüche,
**dadurch gekennzeichnet,**
**dass** diese aufweist
a) 0,5% bis 5% eines Esters eines pflanzlichen Lipids mit einer Genusssäure;
b) 0% bis 2% Lecithin; und
c) 15% bis 30% Quillaja-Extrakt,
wobei die Summe aus der Komponente a) und b) bevorzugt im Bereich von 0,5% bis 5% liegt.

11. Verfahren zur Herstellung einer Emulsion nach einem der vorhergehenden Ansprüche,
**dadurch gekennzeichnet,**
**dass** die Emulsion mittels eines Hochdruck-Homogenisators bei einem Druck von 200 bar bis 900 bar hergestellt wird.

12. Verwendung einer Emulsion nach einem der Ansprüche 1 bis 10 im Nahrungsmittelbereich, insbesondere in einem Nahrungsmittel, besonders bevorzugt zur Emulgierung eines Carotinoids in einem Fruchtgetränk oder einer Fruchtzusammensetzung.

13. Verwendung nach Anspruch 12, wobei die Emulsion, in einem Getränk, bevorzugt in einem sauren Getränk, insbesondere mit einem pH-Wert ≤ 3,5, verwendet wird, das bevorzugterweise 0,05 bis 2 g/kg der Emulsion pro kg Getränk enthält, wobei insbesondere im Getränk ein Gesamtgehalt an Saponinen, vorzugsweise enthalten im zugesetzten Quillaja-Extrakt, im Bereich von 5 ppm bis 50 ppm, bevorzugter 7,5 ppm bis 30 ppm, besonders bevorzugt > 10 ppm bis 25 ppm, insbesondere bevorzugt 5 ppm bis 15 ppm, vorliegt.

14. Emulsion nach einem der der vorangehenden Ansprüche 1 bis 10,
**dadurch gekennzeichnet,**
**dass** die Emulsion folgende Gesamtrezeptur aufweist:
a) Öl-Phase:
| | |
|---|---|
| - Ascorbylpalmitat | 0,5% bis 5% |
| - Lecithin | 0% bis 2% |
| - Carotinoid | 1,0% bis 10% |
| - pflanzliches Öl | 2,0% bis 20% |
| - Tocopherol | 1,0% bis 3%, |
wobei die Summe aus Ascorbylpalmitat und Lecithin bevorzugt im Bereich von 0,5% bis 5% liegt;
b) Wasserphase:
| | |
|---|---|
| - höherer Alkohol wie Glycerol | |
| und/oder Zuckeralkohol wie Sorbitol | |
| und/oder Zuckersirup, wie Fructose | 40% bis 80% |
| - Saponin(e), bevorzugt Quillaja-Extrakt | 15% bis 30% |
wobei der Quillaja-Extrakt, insbesondere 20%ig, in Wasser gelöst ist.

15. Getränk, insbesondere Frucht-Getränk, welches vorzugsweise ein saures Getränk mit einem pH-Wert von ≤ 3,5, insbesondere 2,5 bis 3,5, ist, **dadurch gekennzeichnet, dass** das Getränk eine Emulsion gemäß einem der vorhergehenden Ansprüche 1 bis 10 oder 14 umfasst.

## Claims

1. An emulsion for use in foods, comprising an aqueous and an oily phase, which have
- one or more liposoluble components to be emulsified;
- one or more emulsifiers in the aqueous phase, selected from the group formed by saponins; and
- one or more esters from a vegetable lipid with an edible acid in the oily phase,
wherein the liposoluble component to be emulsified is a carotenoid, the vegetable lipid is a saturated fatty acid which satisfies the following general formula: CH₃-(CH₂)ₓCOOH in which x = 8 to 25, and the edible acid is ascorbic acid.

2. The emulsion as claimed in claim 1,
**characterized in that**
the vegetable lipids are selected from lauric acid, palmitic acid or stearic acid.

3. The emulsion as claimed in claim 1 or claim 2,
**characterized in that**
the ester or the esters of vegetable lipids with edible acids are selected from the group consisting of ascorbyl palmitate and ascorbyl stearate, wherein ascorbyl palmitate is preferred.

4. The emulsion as claimed in one of the preceding claims,
**characterized in that**
the saponins are quillaia extract, wherein preferably, the quillaia extract is a 20% extract dissolved in water.

5. The emulsion as claimed in one of claims 2 to 4,
**characterized in that**
the carotenoid is selected from alpha- or beta-carotene, bixin, capsanthin, capsorubin, lutein, rhodoxanthin, lycopene or apocarotenal.

6. The emulsion as claimed in one of the preceding claims,
**characterized in that**
lecithin is present in the oily phase as the emulsifier, preferably in the form of phosphatidyl choline.

7. The emulsion as claimed in one of the preceding claims,
**characterized in that**
the aqueous phase contains one or more components which are selected from one or more polyols, one or more sugar alcohols, one or more sugar syrups, one or more hydrocolloids or mixtures thereof, wherein preferred polyols are propylene glycol and glycerol, preferred sugar alcohols are glycerol and sorbitol, preferred sugar syrups are fructose, glucose and invert sugar and preferred hydrocolloids are gum arabic, pectin and modified starch.

8. The emulsion as claimed in one of the preceding claims,
**characterized in that**
the emulsion is transparent to light of a wavelength which lies within a range that is visible to the human eye, and/or **in that** the emulsion has an absorption coefficient of less than 0.1 at 700 nm, and/or **in that** the mean size of the oil droplets in the emulsion is 50 nm to 600 nm, preferably < 200 nm, more preferably < 100 nm, and/or **in that** the emulsion has a turbidity coefficient (FNU value) of 40 or less.

9. The emulsion as claimed in one of the preceding claims,
**characterized in that**
in addition to quillaia extract dissolved in water, the aqueous phase additionally comprises a higher alcohol such as glycerol and/or a sugar alcohol such as sorbitol and/or sugar syrups such as fructose, and/or **in that** the emulsion comprises between 40% and 80% of sugar alcohol such as glycerol or sorbitol, and/or sugar syrup such as fructose, and/or glucose.

10. The emulsion as claimed in one of the preceding claims,
**characterized in that**
it comprises
a) 0.5% to 5% of an ester of a vegetable lipid with an edible acid;
b) 0 to 2% of lecithin; and
c) 15%to 30% of quillaia extract,
wherein the sum of components a) and b) is preferably in the range 0.5% to 5%.

11. A method for the production of an emulsion as claimed in one of the preceding claims,
**characterized in that**
the emulsion is produced using a high pressure homogenizer at a pressure of 200 bar to 900 bar.

12. Use of an emulsion as claimed in one of claims 1 to 10 in the food sector, in particular in foods, particularly preferably for the emulsification of a carotenoid in a fruit beverage or a fruit composition.

13. The use as claimed in claim 12, wherein the emulsion is used in a beverage, preferably in an acidic beverage, in particular having a pH of ≤ 3.5, which preferably comprises 0.05 g/kg to 2 g/kg of the emulsion per kg of beverage, wherein in particular, the beverage contains a total content of saponins, preferably contained in the added quillaia extract, in the range 5 ppm to 50 ppm, more preferably 7.5 ppm to 30 ppm, particularly preferably >10 ppm to 25 ppm, especially preferably 5 ppm to 15 ppm.

14. The emulsion as claimed in one of the preceding claims 1 to 10,
**characterized in that**
the emulsion has the following overall formula:
a) oily phase:
| | |
|---|---|
| - ascorbyl palmitate | 0.5% to 5% |
| - lecithin | 0% to 2% |
| - carotenoid | 1.0% to 10% |
| - vegetable oil | 2.0% to 20% |
| - tocopherol | 1.0% to 3%, |
wherein the sum of the ascorbyl palmitate and the lecithin is preferably in the range of 0.5% to 5%;
b) water phase:
- higher alcohol such as glycerol
and/or sugar alcohol such as sorbitol
and/or sugar syrup such as fructose40% to 80%
- saponin(s), preferably quillaia extract 15% to 30%
wherein the quillaia extract, in particular a 20% extract, is dissolved in water.

15. A beverage, in particular a fruit beverage which is preferably an acidic beverage having a pH of ≤ 3.5, in particular 2.5 to 3.5, **characterized in that** the beverage comprises an emulsion as claimed in one of the preceding claims 1 to 10 or 14.

## Revendications

1. Émulsion, destinée à être utilisée dans un produit alimentaire, comprenant une phase aqueuse et une phase huileuse, qui comportent
- un ou plusieurs composants liposolubles à émulsionner ;
- un ou plusieurs émulsifiants dans la phase aqueuse, sélectionnés dans le groupe des saponines ; et
- un ou plusieurs esters d'un lipide végétal, doté d'un acide alimentaire dans la phase huileuse,
le composant liposoluble à émulsionner étant un caroténoïde, le lipide végétal étant un acide gras saturé, qui satisfait à la formule générale suivante : CH₃-(CH₂)ₓCOOH, avec x = de 8 à 25, et l'acide alimentaire étant de l'acide ascorbique.

2. Émulsion selon la revendication 1,
**caractérisée en ce que**
les lipides végétaux sont choisis parmi l'acide laurique, l'acide palmitique ou l'acide stéarique.

3. Émulsion selon la revendication 1 ou 2,
**caractérisée en ce que**
le ou les esters de lipides végétaux dotés d'acides alimentaires sont choisis dans le groupe constitué du palmitate d'ascorbyle, du stéarate d'ascorbyle, le palmitate d'ascorbyle étant préféré.

4. Émulsion selon l'une quelconque des revendications précédentes,
**caractérisée en ce que**
les saponines sont de l'extrait de quillaja, l'extrait de quillaja étant de préférence un extrait dissous à raison de 20 % dans de l'eau.

5. Émulsion selon l'une quelconque des revendications 2 à 4,
**caractérisée en ce que**
le caroténoïde est choisi parmi l'alpha-carotène ou le bêta-carotène, la bixine, la capsanthine, la capsorubine, la lutéine, la rhodoxanthine, le lycopène ou l'apocarotinal.

6. Émulsion selon l'une quelconque des revendications précédentes,
**caractérisée en ce que**
de la lécithine est présente en tant qu'émulsifiant dans la phase huileuse, de préférence sous la forme de phosphatidylcholine.

7. Émulsion selon l'une quelconque des revendications précédentes,
**caractérisée en ce que**
la phase aqueuse contient un ou plusieurs constituants, qui sont sélectionnés parmi un ou plusieurs polyols, un ou plusieurs alcools de sucre, un ou plusieurs sirops de sucre, un ou plusieurs hydrocolloïdes ou leurs mélanges, des polyols préférés étant le propylène glycol et le glycérol, des alcools de sucre préférés étant le glycérol et le sorbitol, des sirops de sucre préférés étant le fructose, le glucose et le sucre inverti et des hydrocolloïdes préférés étant la gomme arabique, la pectine et des amidons modifiés.

8. Émulsion selon l'une quelconque des revendications précédentes,
**caractérisée en ce que**
l'émulsion est transparente à la lumière d'une longueur d'onde qui se situe dans la plage visible pour l'oeil humain, et/ou **en ce que** l'émulsion présente à 700 nm un coefficient d'absorption inférieur à 0,1, et/ou **en ce que** la taille moyenne des gouttelettes d'huile dans l'émulsion est de 50 nm à 600 nm, de préférence est < 200 nm, de manière encore plus préférentielle, est < 100 nm, et/ou **en ce que** l'émulsion présente un coefficient de turbidité (valeur FNU) de 40 ou moins.

9. Émulsion selon l'une quelconque des revendications précédentes,
**caractérisée en ce que**
parallèlement à l'extrait de quillaja dissous dans de l'eau, la phase aqueuse contient additionnellement un alcool supérieur, comme le glycérol, et/ou un alcool de sucre comme le sorbitol, et/ou des sirops de sucre comme le fructose, et/ou **en ce que** l'émulsion comprend entre 40 et 80% d'alcool de sucre, comme le glycérol ou le sorbitol, et/ou du sirop de sucre, comme le fructose, et/ou le glucose.

10. Émulsion selon l'une quelconque des revendications précédentes,
**caractérisée en ce que**
cette dernière comporte
a) de 0,5% à 5% d'un ester d'un lipide végétal pourvu d'un acide alimentaire ;
b) de 0% à 2% de lécithine ; et
c) de 15% à 30% d'extrait de quillaja,
la somme des composants a) et b) se situant de préférence dans l'ordre de 0,5% à 5%.

11. Procédé, destiné à préparer une émulsion selon l'une quelconque des revendications précédentes,
**caractérisé en ce que**
l'émulsion est préparée au moyen d'un homogénéisateur haute pression, à une pression de 200 bar à 900 bar.

12. Utilisation d'une émulsion selon l'une quelconque des revendications 1 à 10 dans le secteur des produits alimentaires, notamment dans un produit alimentaire, de manière particulièrement préférentielle, pour émulsionner un caroténoïde dans une boisson fruitée ou dans une composition fruitée.

13. Utilisation selon la revendication 12, l'émulsion étant utilisée dans une boisson, de préférence dans une boisson acide, notamment d'une valeur pH ≤ 3,5, qui contient de la manière la plus préférentielle de 0,05 à 2 g/kg de l'émulsion par kg de boisson, étant présente notamment dans la boisson une teneur totale de saponines, contenues de préférence dans l'extrait de quillaja rajouté de l'ordre de 5 ppm à 50 ppm, de manière plus préférentielle de 7,5 ppm à 30 ppm, de manière particulièrement préférentielle de > 10 ppm à 25 ppm, de manière spécifiquement préférentielle, de 5 ppm à 15 ppm.

14. Émulsion selon l'une quelconque des revendications précédentes 1 à 10,
**caractérisée en ce que**
l'émulsion présente la formule totale suivante :
a) phase huileuse :
| | |
|---|---|
| - palmitate d'ascorbyle | de 0,5 % à 5 % |
| - lécithine | de 0 % à 2 % |
| - caroténoïde | de 1,0 % à 10 % |
| - huile végétale | de 2,0 % à 20 % |
| - tocophérol | de 1,0 % à 3 %, |
la somme du palmitate d'ascorbyle et de la lécithine se situant de préférence dans l'ordre de 0,5% à 5% ;
b) phase aqueuse :
- alcool supérieur comme le glycérol
et/ou alcool de sucre comme le sorbitol
et/ou sirop de sucre comme le fructose
de 40 % à 80 %
- saponine(s), de préférence extrait de quillaja de 15 % à 30 % l'extrait de quillaja étant dissous dans de l'eau, notamment à raison de 20%.

15. Boisson, notamment boisson fruitée, laquelle est de préférence une boisson acide d'une valeur pH de ≤ 3,5, notamment de 2,5 à 3,5, **caractérisée en ce que** la boisson comprend une émulsion selon l'une quelconque des revendications précédentes 1 à 10 ou 14.
